# FASCICULE DE BREVET EUROPEEN

(11) **EP 0 925 589 B1**
(45) Date de publication et mention de la délivrance du brevet: **24.09.2003**
(21) Numéro de dépôt: 98937598.5
(22) Date de dépôt: 09.07.1998
(51) Int. Cl.: G21C 3/356

(54) **GRILLE POUR ASSEMBLAGE COMBUSTIBLE NUCLEAIRE ET PLAQUETTE POUR UNE TELLE GRILLE**
ABSTANDSHALTEGITTER FÜR KERNBRENNSTABBÜNDEL UND HALTEFEDERN DAFÜR
GRID FOR NUCLEAR FUEL ASSEMBLY AND INSERT FOR SAME

(30) Priorité: 11.07.1997 FR 9708873
(43) Date de publication de la demande: 30.06.1999
(60) Demande divisionnaire: 03013994.3
(73) Titulaire: Framatome ANP, 92400 Courbevoie (FR)
(72) Inventeur: MAYET, Roland, F-69100 Villeurbanne (FR); BONNAMOUR, Michel, F-69008 Lyon (FR)
(74) Mandataire: Jacobson, Claude
(86) Numéro de dépôt international: FR9801489
(87) Numéro de publication internationale: WO99003108

(56) Documents cités:
- EP-A- 0 025 395
- EP-A- 0 196 598
- FR-A- 2 338 549
- US-A- 5 139 736
- US-A- 5 331 678

## Description

L'invention concerne les grilles de maintien des crayons de combustible d'un assemblage de combustible nucléaire, et notamment celles utilisées dans les réacteurs à eau sous pression pour maintenir les crayons aux noeuds d'un réseau régulier, généralement carré.

Elle concerne notamment la constitution des plaquettes qui sont assemblées entre elles, généralement à mi-fer, pour constituer les grilles.

Les grilles d'un assemblage délimitent des cellules "courantes" destinées à recevoir des crayons et d'autres cellules qui sont traversées par des tubes guides, souvent soudés aux grilles. Classiquement, dans les grilles servant au maintien axial et latéral des crayons, des bossettes rigides d'appui des crayons sont ménagées dans deux des quatre faces de chaque cellule courante de réception de crayon et deux ressorts de maintien découpés ou rapportés sur les deux autres faces, pressent le crayon contre les bossettes.

L'invention concerne en particulier les plaquettes de grille dont les ressorts sont d'une seule pièce avec la partie plate de la plaquette. Ces plaquettes sont constituées, au moins dans la partie de l'assemblage soumis à un flux neutronique élevé, en des alliages à base de zirconium, tels que le Zircaloy 4. Sous irradiation neutronique, les caractéristiques mécaniques de ces alliages se dégradent. On a déjà proposé de limiter les conséquences de cette dégradation par des constitutions particulières des ressorts. Le document FR-A-2 338 549 décrit une plaquette de grille dont chaque ressort comporte une bande ondulée flexible s'étendant dans le sens d'écoulement du réfrigérant, c'est-à-dire dans le sens transversal à la plaquette, ou deux bandes parallèles reliées dans leur partie médiane par une partie qui fait saillie dans l'écoulement et qui est prolongée, entre les deux bandes, par deux pattes. Cette partie en saillie constitue un obscacle qui perturbe l'écoulement du réfrigérant. Le document W0-A-94/2593 décrit un ressort constitué par une bande élastique dont les extrémités sont reliées à la partie courante de la plaquette par deux pontets emboutis. Si les pontets, du fait de leur orientation, ne gênent pas notablement l'écoulement du réfrigérant, la flèche que conserve la lame lorsqu'elle est en appui contre un crayon constitue encore un obstacle à l'écoulement.

US-5 139 736 décrit des plaquettes de grilles selon les préambules des revendications 1 et 2.

EP-025 395 décrit une plaquette de grille dont les ressorts sont constitués de deux bandes d'un tenon reliant les bandes et de deux languettes triangulaires munies de patins curvilignes pour prendre appui sur un crayon combustible. De larges évidements sont prévus dans la plaquette entre les ressorts.

La présente invention vise notamment à fournir une plaquette comportant des ressorts de maintien ayant une constitution telle qu'ils assurent un compromis satisfaisant entre la résistance mécanique, la conservation d'une force élastique de maintien satisfaisante et une transparence élevée à l'écoulement du réfrigérant.

Dans ce but, l'invention propose notamment une plaquette de grille de maintien de crayons de combustible, dans laquelle sont ménagées, à intervalles réguliers, des encoches d'assemblage avec des plaquettes transversales et, entre certaines au moins des paires d'encoches, un ressort de maintien de crayon comportant deux bandes élastiques découpées dans la paroi plane de la plaquette et d'une seule pièce avec elle, dont chacune s'étend dans le sens de l'écoulement axial d'une grille comportant la plaquette et est reliée à la plaquette par ses deux extrémités, les bandes étant en saillie vers l'intérieur de la cellule concernée, au moins à l'état libre, et étant reliées en leur milieu par un pontet transversal, en saillie par rapport aux deux bandes.

Les ressorts d'une plaquette intérieure peuvent avoir tous la même constitution ou peuvent avoir des constitutions différentes, selon par exemple que la paroi dans laquelle est ménagé le ressort sépare deux cellules occupées toutes deux par un crayon ou sépare deux cellules dont l'une est occupée par un tube guide.

Dans le premier cas, les deux bandes élastiques sont avantageusement jointives à proximité de leurs emplantures, c'est-à-dire dans les zones proches de leur raccordement avec la partie courante de la plaquette et sont au contraire éloignées l'une de l'autre dans leurs parties centrales, reliées par le pontet. En particulier, les parties proches de l'emplanture et les parties centrales peuvent être rectilignes dans le sens de l'écoulement ; chaque emplanture est alors raccordée à la partie centrale correspondante par une zone courbe ou oblique. Une telle constitution évite la présence d'ouvertures importantes dans la plaquette, susceptibles de perturber l'écoulement en autorisant notamment des échanges incontrôlés entre cellules.

Dans le deuxième cas, la plaquette constitue une paroi de cellule qui s'adosse à un tube guide ; le ressort peut être constitué par deux bandes parallèles l'une à l'autre et au sens d'écoulement, dont les parties centrales sont reliées par le pontet. La présence d'une ouverture dans la plaquette ne présente pas d'inconvénient à cet endroit étant donné qu'elle est obturée par le tube guide.

De part et d'autre d'un tel ressort, dans le sens de l'écoulement, subsiste une zone sensiblement plate dans laquelle la plaquette peut être fixée au tube guide par une soudure.

Un appui doit être fourni au crayon placé à l'opposé du sens d'action d'un ressort. Pour cela le ressort, situé dans une partie médiane de la plaquette, est en général encadré par deux appuis constitués par des pontets emboutis, transversaux à l'écoulement pour ne pas modifier sensiblement la section de passage du réfrigérant. Les pontets des ressorts et ceux des appuis peuvent avoir la même forme.

La forme initiale donnée aux bandes du ressort par emboutissage est avantageusement telle que les bandes soient repoussées sensiblement dans le même plan que la partie courante de la plaquette lors de l'introduction d'un crayon que doit retenir le ressort. La saillie des pontets et celle des bossettes dans une cellule sont avantageusement égales lorsque les ressorts sont en position active.

Les plaquettes peuvent être munies également d'ailettes déflectrices destinées à améliorer le mélange du réfrigérant. présentant une forme courbe.

La grille comprend généralement des plaquettes extérieures constituant une ceinture et qui sont en butée sur les plaquettes intérieures par des liaisons de type tenon-mortaise. Ces plaquettes extérieures peuvent présenter des ailettes de guidage destinées à limiter le risque d'accrochage entre les grilles d'assemblages adjacents lors du chargement ou du déchargement d'un assemblage combustible.

Dans un mode avantageux de réalisation, les plaquettes extérieures sont cintrées à la base des ailettes de guidage et épousent les arêtes terminales des plaquettes intérieures courantes, présentant des formes courbes à cet effet.

Les plaquettes extérieures peuvent contribuer également au maintien des crayons périphériques et être munies de ressorts. Compte tenu du nombre relativement faible de cellules de grilles concerné et afin de donner une grande robustesse à ces plaquettes, les ressorts, obtenus par découpe et emboutissage, peuvent être disposés dans le sens de l'écouclement.

Les plaquettes peuvent notamment être constituées en un des alliages de zirconium dénommés "Zircaloy 4", à l'état recristallisé.

Les caractéristiques ci-dessus, avantageusement utilisables en combinaison mais pouvant l'être séparément, ainsi que d'autres, apparaîtront mieux à la lecture de la description qui suit de modes particuliers de réalisations, donnés à titre d'exemples non limitatifs. La description se réfère aux dessins qui l'accompagnent, dans lesquels :
- la figure 1 est une vue en perspective d'une fraction de grille et d'un tube guide, les plaquettes intérieures étant munies de ressorts conformément à un mode particulier de réalisation et représentées à l'état libre ;
- la figure 2, similaire à la figure 1, montre les ressorts en position "active", c'est-à-dire dans l'état où ils sont repoussés par l'appui d'un crayon ;
- la figure 3 est une vue en coupe suivant un plan passant par l'axe d'une cellule contenant un crayon, montrant un ressort en position active et un ressort à l'état libre ;
- la figure 4 est une vue de dessus de la figure 3 ;
- la figure 5, similaire à un fragment de la figure 1, montre une variante de réalisation, permettant d'accroître la robustesse des grilles ;
- la figure 6 est une vue de face d'un fragment d'une plaquette extérieure appartenant à la ceinture de la grille, montrant un ressort de maintien de crayon à élasticité renforcée et à moindre susceptibilité aux sollicitations extérieures accidentelles ;
- les figures 7 et 8 sont des vues en coupe de la figure 6, respectivement suivant les lignes VII-VII et VIII-VIII ;
- la figure 9 montre un fragment de plaquette comportant des ressorts du genre montré en figure 1 et sa jonction avec une plaquette de ceinture ;
- la figure 10 montre, en perspective, un fragment de grille du genre montré en figure 9.

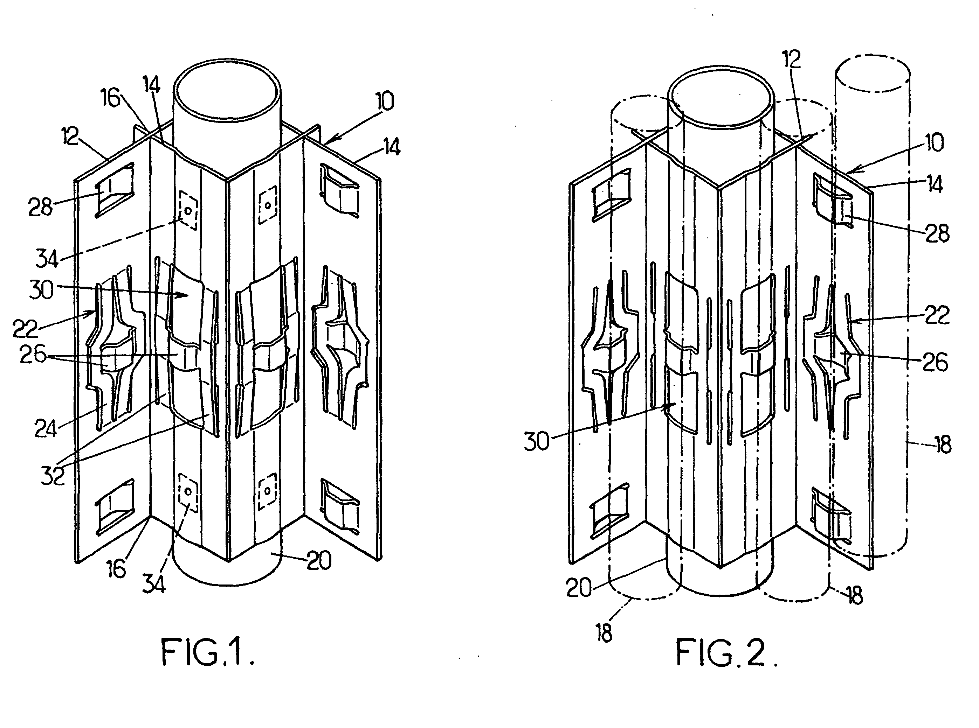

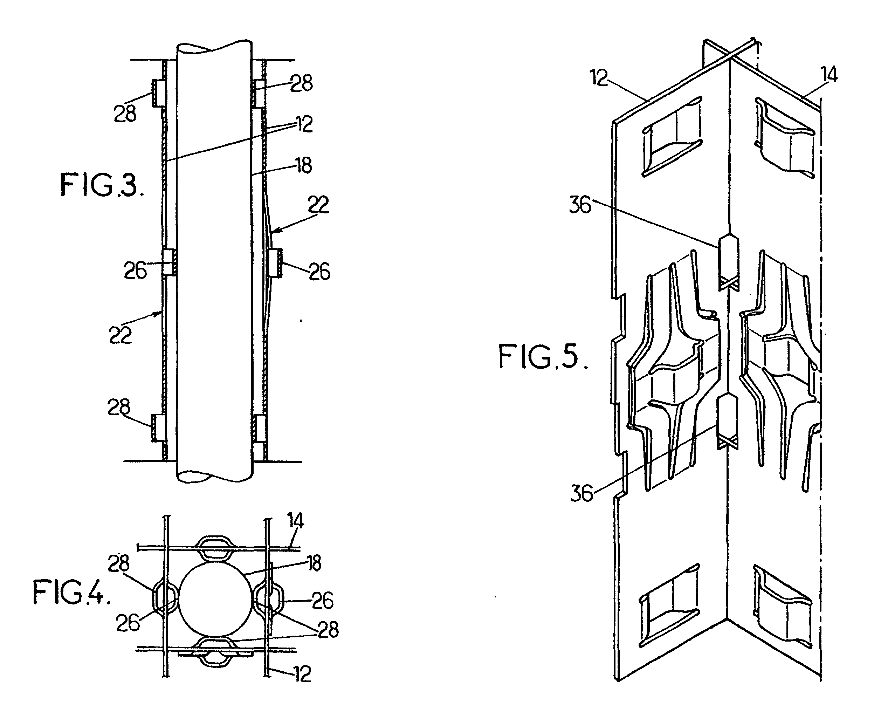

La grille 10, dont un fragment est montré en figures 1 et 2, est notamment constituée de deux jeux de plaquettes 12 et 14 entrecroisées, emboîtées à mi-fer et présentant pour cela des encoches. Ces plaquettes sont fixées entre elles, par exemple par soudage aux points de croisement 16. Les plaquettes 12 et 14 délimitent des cellules destinées à recevoir des crayons de combustible 18, tels que ceux représentés en traits mixtes sur la figure 2. Certaines des cellules reçoivent au contraire des tubes guides 20 destinés à livrer passage aux crayons absorbants de grappes de commande. Généralement, au moins certains de ces tubes guides sont fixés aux grilles. Ils relient un embout supérieur et un embout inférieur d'assemblage, non représentés.

Certaines au moins des grilles d'un assemblage sont destinées à maintenir les crayons aux noeuds d'un réseau régulier et à les supporter verticalement. La grille montrée à titre d'exemple en figures 1 et 2 remplit ces deux fonctions. Pour cela, la grille comporte, dans deux directions orthogonales, des moyens d'appui ménagés dans une face de la cellule et un ressort découpé dans la face opposée de la cellule et pressant le crayon contre les moyens d'appui.

Deux des faces de chaque cellule contenant un crayon présentent un ressort dont l'élasticité tend à l'amener en saillie dans la cellule. Ce ressort a une constitution différente suivant qu'il est adossé à une cellule destinée à recevoir un crayon de combustible ou à une cellule qui contient un tube guide 20.

Chacun des ressorts 22 séparant deux cellules occupées par des crayons est constitué de deux bandes élastiques 24 découpées dans la paroi plane de la plaquette et d'une seule pièce avec elle, reliées en leur milieu par un pontet transversal 26 en saillie par rapport aux deux bandes. Chaque bande s'étend dans le sens transversal à la grande dimension de la plaquette, c'est-à-dire dans le sens de l'écoulement. Chaque bande 24 est reliée à la plaquette par ses deux extrémités. Au repos, elle est inclinée vers l'intérieur de la cellule à partir de ses extrémités (figure 1). Le pontet représente une saillie supplémentaire par rapport aux deux bandes auxquelles il se raccorde.

Chacun des ressorts 22 est encadré, dans le sens de l'écoulement, par des moyens d'appui constitués par deux bossages 28. Les bossages 28 et les pontets 26 peuvent avoir exactement la même forme.

La fabrication des ressorts et des pontets peut s'effectuer de façon classique, par emboutissage et étirage.

Les bandes élastiques 24 sont jointives à proximité de leur emplanture et éloignées l'une de l'autre dans leur partie centrale, pour laisser la place nécessaire au pontet. Ainsi la brèche entre les deux bandes, qui fait communiquer deux cellules adjacentes occupées chacune par un crayon, est de faible largeur ; elle ne perturbe pratiquement pas l'écoulement.

Les ressorts 30 adossés à une cellule contenant un tube guide 20 comportent eux aussi deux bandes élastiques découpées et reliées dans leur partie centrale par un pontet 26. Mais les deux bandes 32 du ressort 30 s'étendent sensiblement parallèlement l'une à l'autre et au sens d'écoulement. La brèche ainsi constituée est sans inconvénient, puiqu'elle est obturée par le tube guide 20.

La grille peut être fixée aux tubes guides par des points de soudage soit dans des zones 34 sensiblement planes ou légèrement bombées, situées de part et d'autre des ressorts 30, soit sur des languettes ménagées en partie supérieure et/ou inférieure des plaquettes au droit de la cellule contenant le tube guide 20.

La saillie des pontets 26 par rapport aux bandes et la forme des bandes au repos sont avantageusement choisies de façon telle que les bandes soient repoussées sensiblement dans le même plan que la partie courante de la plaquette lorsque les crayons 18 sont en place, comme cela apparaît sur les figures 2, 3 et 4.

Sur la figure 3 par exemple, le ressort 22 de la plaquette 12 de droite est en saillie, du fait qu'aucun crayon ne la repousse. En revanche, le ressort 22 de la plaquette de gauche est fléchi par un crayon 18 à un point tel que ses bandes sont pratiquement dans le même plan que la partie courante de la plaquette 12, de sorte qu'elles ne gênent pas l'écoulement.

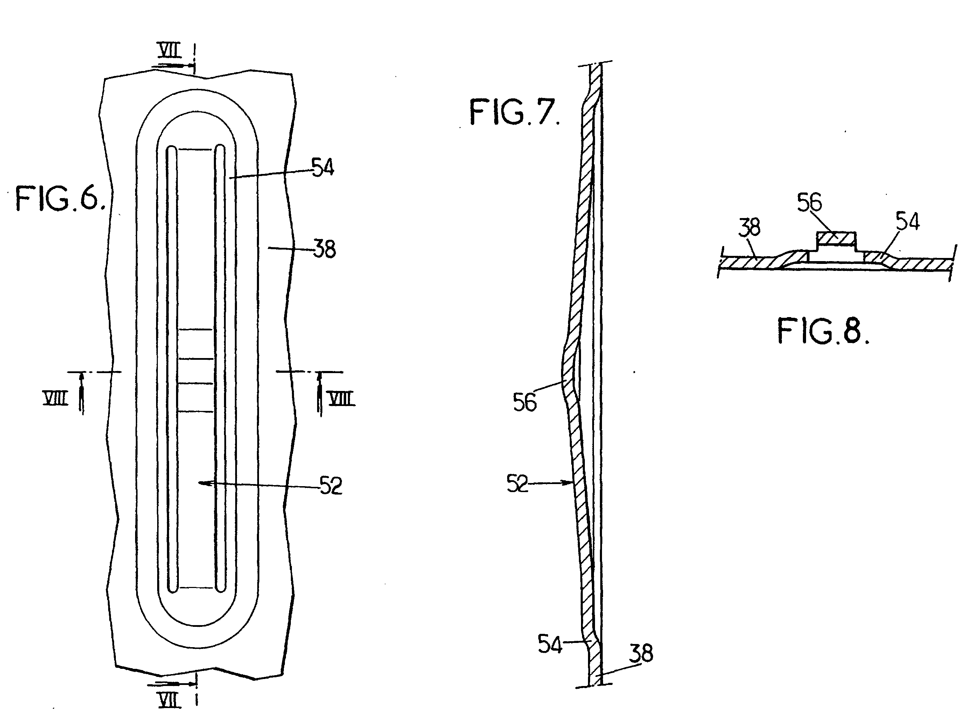

Pour accroître la robustesse des grilles, les plaquettes peuvent être soudées entre elles non seulement aux points de croisement 16 sur chaque grande face de la grille, mais aussi en des emplacements supplémentaires. La figure 5 montre par exemple des plaquettes 12 ayant deux fenêtres supplémentaires 36 alignées sur chaque ligne de croisement avec une autre plaquette. On constitue ainsi des accès permettant de souder les plaquettes en deux points supplémentaires au moins. Le soudage est effectué à l'aide d'un outil introduit dans la grille, par exemple à faisceau laser. Les fenêtres 36 seront généralement situées entre les bossages au niveau du ressort, dans le sens de l'écoulement.

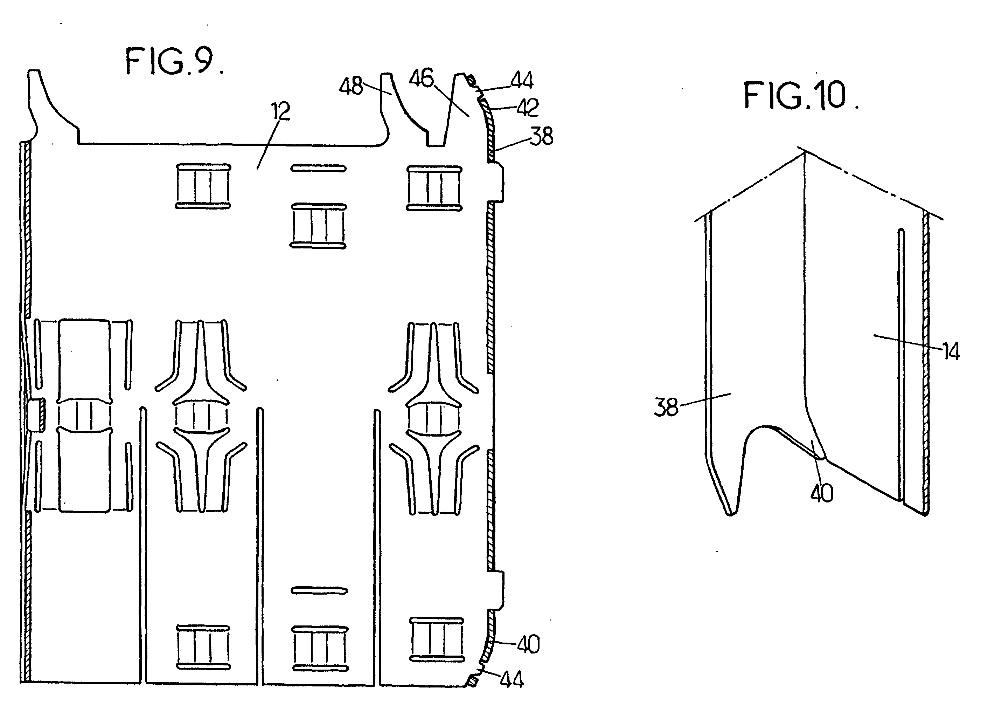

La grille peut comporter quatre plaquettes extérieures reliées entre elles pour constituer une ceinture. Lors du chargement ou du déchargement d'un assemblage combustible, il existe un risque qu'une ceinture de cet assemblage s'accroche à la ceinture d'un assemblage voisin. Pour réduire ce risque, on a déjà proposé de cintrer les angles de la ceinture vers l'intérieur. Le risque d'accrochage est encore réduit dans le cas de la ceinture, dont un fragment est montré en figures 9 et 10. Les plaquettes extérieures, constituant la ceinture, ont une forme particulière. Ces plaquettes sont cintrées vers l'intérieur dans les parties 40 proche de leur arête amont et 42 proche de leur arête aval. Les extrémités des plaquettes courantes 12 et 14 sont découpées en conséquence. La partie amont de l'extrémité de chaque plaquette 12 ou 14 est arrondie ou biseautée et peut de plus présenter un ergot 44 engagé dans un trou de la portion cintrée de la plaquette de ceinture.

La partie aval de l'extrémité de chaque plaquette 12 ou 14 comporte une excroissance 46 dirigée dans le sens de l'écoulement, à arête arrondie ou biseautée, sur laquelle s'appuie la ceinture. Cette excroissance peut elle aussi avoir un ergot 44. La saillie de l'excroissance peut être sensiblement égale à celle des ailettes de déviation d'écoulement 48 classiquement prévues.

La ceinture représentée en figures 9 et 10 peut être utilisée avec des plaquettes courantes 12 et 14 dont les ressorts ont une constitution différente de celle montrée sur les figures 1 à 4 ; leur constitution peut notamment être classique.

Les ressorts de maintien des crayons périphériques situés sur la ceinture extérieure sont susceptibles d'être exposés à des sollicitations accidentelles risquant d'altérer leur fonction de supportage. Dans un mode avantageux de réalisation de l'invention, la grille comporte une ceinture 38 dans laquelle sont ménagés des ressorts renforcés. Pour cela on limite le débattement des lames élastiques et on accroît leur protection en les disposant en retrait par rapport à la face externe de la grille.

Le renforcement peut être assuré notamment par des moyens du genre montré en figures 6 à 8. Le ressort 52 est constitué par découpe et cintrage d'une zone de la ceinture qui est déformée vers l'intérieur pour constituer un renflement 54. Sur la figure 6 on voit que ce renflement est de forme allongée dans le sens de l'écoulement, et donc du ressort, avec des bords parallèles raccordés par des portions semi-circulaires. Le renflement peut être constitué par emboutissage ou mise en forme à la presse.

Le ressort 52 lui-même est de forme classique, avec une partie centrale 56 débordante, mais cette forme n'est pas indispensable ; sa saillie au repos peut être différente de celle des ressorts 22 et 30. Grâce à la présence du renflement, le ressort est protégé des risques d'agression extérieure directe, ce qui permet de tirer entièrement parti de ces découpes latérales pour lui conférer une rigidité et une élasticité optimale. De plus, le renflement limite naturellement la flèche maximale du ressort en limitant le déplacement d'un crayon vers l'extérieur de la grille à une valeur telle que le crayon s'appuie sur lui.

Lorsqu'il est nécessaire de réduire le plus possible les pertes de charge imposées au réfrigérant, l'arête amont des plaquettes, de la ceinture, des bossettes et/ou des pontets peut être profilée, par exemple comme décrit dans la demande de brevet FR 9 708 874 correspondant à la demande publiée EP-0 890 958 A1 déposée le même jour que la présente demande et ayant pour titre "Plaquettes de grille pour assemblage combustible nucléaire et grille comportant de telles plaquettes".

## Revendications

1. Plaquette de grille de maintien de crayons de combustible. dans laquelle sont ménagées, à intervalles réguliers, des encoches d'assemblage avec des plaquettes transversales et, entre certaines au moins des paires d'encoches, un ressort (22,30) de maintien de crayon comportant deux bandes élastiques (24) découpées dans la paroi plane de la plaquette et d'une seule pièce avec elles, dont chacune s'étend principalement dans le sens de l'écoulement et est reliée à la partie courante de la plaquette par ses deux extrémités, les bandes étant en saillie vers l'intérieur de la cellule concernée à l'état libre et étant reliées en leur milieu par un pontet transversal (26), en saillie par rapport aux deux bandes, **caractérisée en ce que** les deux bandes élastiques (24) de certains au moins (22) des ressorts sont jointives à proximité de leur emplanture et éloignées l'une de l'autre dans leurs parties centrales reliées par le pontet (26).

2. Plaquette de grille de maintien de crayons de combustible, dans laquelle sont ménagées, à intervalles réguliers, des encoches d'assemblage avec des plaquettes transversales et, entre certaines au moins des paires d'encoches, un ressort (22,30) de maintien de crayon comportant deux bandes élastiques (24) découpées dans la paroi plane de la plaquette et d'une seule pièce avec elles, dont chacune s'étend principalement dans le sens de l'écoulement et est reliée à la partie courante de la plaquette par ses deux extrémités, les bandes étant en saillie vers l'intérieur de la cellule concernée à l'état libre et étant reliées en leur milieu par un pontet transversal (26), en saillie par rapport aux deux bandes, **caractérisée en ce que** la forme des bandes et du pontet de chaque ressort (22,30) est telle que les bandes soient repoussées élastiquement dans le même plan que la partie courante de la plaquette munie du ressort par la présence d'un crayon.

3. Plaquette selon la revendication 1 ou 2, **caractérisée en ce que** les ressorts ont des constitutions différentes suivant que la paroi dans laquelle est ménagé le ressort sépare deux cellules destinées à être occupées toutes deux par un crayon ou sépare deux cellules dont l'une est destinée à être occupée par un cube guide (20).

4. Plaquette selon la revendication 1, 2 ou 3, **caractérisée en ce que** les deux bandes de certains seulement des ressorts (30) sont sensiblement parallèles l'une à l'autre et au sens d'écoulement.

5. Plaquette selon la revendication 2, **caractérisée en ce que** les ressorts (30) ayant des bandes parallèles sont adossés à une cellule traversée par un tube guide (20).

6. Plaquette selon la revendication 4 ou 5, **caractérisée en ce que** chacun des ressorts (30) ayant des bandes parallèles est encadré dans le sens transversal à la plaquette par des zones de soudage sensiblement planes ou légèrement bombées ou par des languettes de soudage ménagées au droit de la cellule contenant le tube guide.

7. Plaquette selon l'une quelconque des revendications 1 à 4, **caractérisée en ce que** chaque ressort destiné à être adossé à une cellule contenant un crayon combustible est encadré, dans le sens transversal à la grande dimension de la plaquette, par deux bossages (28) en saillie dans une direction opposée à celle du ressort (22).

8. Plaquette selon la revendication 7, **caractérisée en ce que** le pontet (26) d'un ressort (22) et les bossages (28) qui l'encadrent et qui constituent des moyens de butée ont la même forme.

9. Grille de maintien de crayons de combustible pour assemblage combustible nucléaire, constituée de deux jeux entrecroisés de plaquettes (12,14) selon l'une quelconque des revendications précédentes, **caractérisée en ce que** la partie amont de chaque extrémité de chaque plaquette comporte des découpes ou renforts de forme courbe servant d'appui à une ceinture (38) cintrée vers l'intérieur, au moins à l'amont de la grille.

10. Grille selon la revendication 9, **caractérisé en ce que** les découpes ou renforts de forme courbe comportent un ergot (44) engagé dans un trou de la partie cintrée de la ceinture.

11. Grille selon la revendication 9 ou 10, **caractérisée en ce que** la ceinture porte des ressorts renforcés, d'une seule pièce avec elle.

12. Grille selon la revendication 11, **caractérisée en ce que** chaque ressort de ceinture est découpé dans une zone de la ceinture qui est déformée vers l'intérieur pour constituer un renflement, protégeant les ressorts contre les sollicitations extérieures directes et contre un déplacement excessif du crayon vers l'extérieur.

13. Grille selon la revendication 10, 11 ou 12, **caractérisée en ce que** chaque plaquette présente des fenêtres (36) alignées avec les encoches et deux plaquettes entrecroisées sont soudées en au moins deux points situés au bord des fenêtres et s'ajoutant à des soudures aux points de croisement sur les grandes faces de la grille.

## Patentansprüche

1. Kernbrennstabbündel-Haltegitterplatte, in regelmäßigen Abständen Einschnitte für den Zusammenbau mit transversalen Platten und zwischen wenigstens einigen der Einschnittpaare eine Kembrennstab-Haltefeder (22, 30) mit zwei elastischen Streifen (24) umfassend, zugeschnitten in der ebenen Wand der Platte und aus einem Stück mit dieser, von denen jede sich hauptsächlich in Strömungsrichtung erstreckt und mit dem gewöhnlichen Teil der Platte durch ihre beiden Enden verbunden ist, wobei die Streifen im freien Zustand in das Innere der betreffenden Zelle hineinragen und in ihrer Mitte durch eine Querbrücke (26) verbunden sind, die in Bezug auf die beiden Streifen vorsteht,
**dadurch gekennzeichnet,**
**dass** die beiden elastischen Streifen (24) wenigstens einiger (22) Federn sich an ihren Wurzeln vereinigen und in ihren mittleren, durch die Brücke (26) verbundenen Teilen voneinander entfernt sind.

2. Kembrennstabbündel-Haitegitterplatte, in regelmäßigen Abständen Einschnitte für den Zusammenbau mit transversalen Platten umfassend und, zwischen wenigstens einigen der Einschnittpaare, eine Brennstab-Haltefeder (22, 30) mit zwei elastischen Streifen (24), zugeschnitten in der ebenen Wand der Platte und aus einem Stück mit dieser, von denen jede sich hauptsächlich in der Strömungsrichtung erstreckt und mit dem gewöhnlichen Teil der Platte durch ihre beiden Enden verbunden ist, wobei die Streifen im freien Zustand ins Innere der betreffenden Zelle ragen und in ihrer Mitte durch eine Querbrücke (26) verbunden sind, die in Bezug auf die beiden Streifen vorsteht,
**dadurch gekennzeichnet,**
**dass** die Form der Streifen und der Brücke jeder Feder (22, 30) derartig ist, dass die Streifen durch das Vorhandensein eines Brennstabs elastisch in die Ebene des gewöhnlichen Teils der mit dieser Feder ausgestatteten Platte zurückgedrückt wird.

3. Platte nach Anspruch 1 oder 2, **dadurch gekennzeichnet, dass** die Federn unterschiedlich beschaffen sind, abhängig davon, ob die Wand, in der die Feder realisiert ist, zwei Zellen trennt, die beide dazu bestimmt sind, einen Brennstab aufzunehmen, oder zwei Zellen trennt, von denen eine dazu bestimmt ist, ein Führungsrohr (20) aufzunehmen.

4. Platte nach Anspruch 1, 2 oder 3, **dadurch gekennzeichnet, dass** die beiden Streifen nur bei einigen der Federn (30) im Wesentlichen zueinander und zur Strömungsrichtung parallel sind.

5. Platte nach Anspruch 2, **dadurch gekennzeichnet, dass** die Federn (30), die parallele Streifen haben, mit ihrer Rückseite zu einer Zelle gehören, die von einem Führungsrohr (20) durchquert wird.

6. Platte nach Anspruch 4 oder 5, **dadurch gekennzeichnet, dass** jede der Federn (30) mit parallelen Streifen in Querrichtung zur Platte von im Wesentlichen ebenen oder leicht gewölbten Schweißzonen umgeben ist oder von Schweißzungen, vorgesehen in Höhe der das Führungsrohr enthaltenden Zelle.

7. Platte nach einem der Ansprüche 1 bis 4, **dadurch gekennzeichnet, dass** jede Feder, die dazu bestimmt ist, einen Brennstab zu halten, in Querrichtung zu der großen Abmessung der Platte von zwei Höckern (28) umgeben ist, die in einer zu der Richtung der Feder (22) umgekehrten Richtung vorstehen.

8. Platte nach Anspruch 7, **dadurch gekennzeichnet, dass** die Brücke (26) einer Feder (22) und die Höcker (28), die sie umgeben und Anschlageinrichtungen bilden, dieselbe Form haben.

9. Haltegitter für Kernbrennstoffstäbe, gebildet durch zwei Sätze sich kreuzender Platten (12, 14) nach einem der vorangehenden Ansprüche, **dadurch gekennzeichnet, dass** der obere Teil jedes Endes jeder Platte Ausschnitte oder Verstärkungen von gekrümmter Form umfasst, die einem nach innen gebogenen Gürtel (38) als Abstützung dienen, wenigstens an der Oberseite des Gitters.

10. Gitter nach Anspruch 9, **dadurch gekennzeichnet, dass** die Ausschnitte oder Verstärkungen von gekrümmter Form einen Vorsprung (44) umfassen, der in einem Loch des gebogenen Teils des Gürtels sitzt.

11. Gitter nach Anspruch 9 oder 10, **dadurch gekennzeichnet, dass** der Gürtel verstärkte Federn, die mit ihm aus einem Stück sind, umfasst.

12. Gitter nach Anspruch 11, **dadurch gekennzeichnet, dass** jede Gürtelfeder in einer Zone des Gürtels ausgeschnitten ist, die nach innen verformt ist, um eine Verstärkung zu bilden, die die Federn gegen die direkten äußeren Belastungen und gegen eine exzessive Verschiebung des Brennstabs nach außen schützt.

13. Gitter nach Anspruch 10, 11 oder 12, **dadurch gekennzeichnet, dass** jede Platte Fenster (36) hat, ausgerichtet mit den Einschnitten, und zwei gekreuzte Platten in wenigstens zwei Punkten verschweißt sind, die sich am Rand der Fenster befinden und zu Schweißungen an den Kreuzungspunkten in den großen Flächen des Gitters hinzukommen.

## Claims

1. Grid plate for retaining fuel rods in which there are provided, at regular intervals, slots for assembly with transverse plates and, between at least certain of the pairs of slots, a rod-retaining spring (22, 30) having two resilient strips (24) cut out from the plane wall of the plate and integral therewith, each of which extends principally in the direction of flow and is connected to the current part of the plate by its two ends, the strips projecting towards the interior of the cell concerned when in the free state and being connected in the middle by a transverse bridge (26) projecting with respect to the two strips, **characterised in that** the two resilient strips (24) of at least certain (22) of the springs are joined in the vicinity of their roots and distanced from one another by their central parts which are connected the bridge (26).

2. Grid plate for retaining fuel rods in which there are provided, at regular intervals, slots for assembly with transverse plates and, between at least certain of the pairs of slots, a rod-retaining spring (22, 30) having two resilient strips (24) cut out from the plane wall of the plate and integral therewith, each of which extends principally in the direction of flow and is connected to the current part of the plate by its two ends, the strips projecting towards the interior of the cell concerned when in the free state and being connected in the middle by a transverse bridge (26) projecting with respect to the two strips, **characterised in that** the shape of the strips and of the bridge of each spring (22, 30) is such that the strips are pushed back resiliently in the same plane as the current part of the plate equipped with the spring by the presence of a rod

3. Plate as claimed in Claim 1 or 2, **characterised in that** the springs have different structures depending upon whether the wall in which spring is provided separates two cells both intended to be occupied by a rod or separates two cells of which one is intended to be occupied by a guide tube (20).

4. Plate as claimed in Claim 1, 2 or 3, **characterised in that** the two strips only certain of the springs (30) are substantially parallel to one another and to the direction of flow.

5. Plate as claimed in Claim 2, **characterised in that** the springs (30) having parallel strips are backed by a cell through which a guide tube (20) passes.

6. Plate as claimed in Claim 4 or 5, **characterised in that** in the transverse direction with respect to the plate each of the springs (30) having parallel strips is surrounded by weld zones which are substantially plane or slightly convex or by welding tabs provided at right angles to the cell containing the guide tube.

7. Plate as claimed in anyone of Claims 1 to 4, **characterised in that** each spring intended to backed by a cell containing a fuel rod is surrounded, in the transverse direction with respect to the large dimension of the plate, by two bosses (28) projecting in an opposite direction to that of the spring (22).

8. Plate as claimed in Claim 7, **characterised in that** the bridge (26) of a spring (22) and the bosses (28) which surround it and which constitute stop means have the same shape.

9. Grid for retaining fuel rods for a nuclear fuel assembly, consisting of two inter-crossed sets of plates (12, 14) as claimed in any one of the preceding claims, **characterised in that** the upstream part of each end of each plate includes cut-outs or reinforcements of curved shape which serve as support for a belt (38) which is curved towards the interior, at least upstream of the grid.

10. Grid as claimed in Claim 9_{,} **characterised in that** the cut-outs or reinforcements of curved shape include a lug (44) engaged in a hole in the curved part of the belt.

11. Grid as claimed in Claim 9 or 10, **characterised in that** the belt bears reinforced springs which are integral with it.

12. Grid as claimed in Claim 11, **characterised in that** each spring of the belt is cut out in a zone of the belt which is deformed towards the interior in order to form a swelling, protecting the springs against direct external stresses and against an excessive displacement of the rod towards the exterior.

13. Grid as claimed in Claim 10, 11 or 12, **characterised in that** each plate has windows (36) aligned with the slots and two inter-crossed plates are welded at least at two points situated on the edge of the windows in addition to welds at the crossing points on the large faces of the grid.
